# EUROPEAN PATENT SPECIFICATION

(11) **EP 3 967 915 B1**
(45) Date of publication and mention of the grant of the patent: **19.10.2022**
(21) Application number: 20739736.5
(22) Date of filing: 22.06.2020
(51) Int. Cl.: F16L 3/12

(54) **SECURING DEVICE FOR SECURING A TUBE TO A WALL**
BEFESTIGUNGSVORRICHTUNG ZUR BEFESTIGUNG EINES ROHRES AN EINER WAND
DISPOSITIF DE FIXATION POUR FIXER UN TUBE SUR UN MUR

(30) Priority: 27.06.2019 ES 201930593
(43) Date of publication of application: 16.03.2022
(73) Proprietor: Unex Aparellaje Electrico S.L., 08903 L'Hospitalet de Llobregat (Barcelona) (ES)
(72) Inventor: FERNÁNDEZ LÓPEZ, Marta, 08903 L'Hospitalet de Llobregat (ES)
(74) Representative: Curell Suñol S.L.P.
(86) International application number: PCT/ES2020/070407
(87) International publication number: WO 2020/260738

(56) References cited:
- WO-A1-2006/094609
- DE-A1-102004 028 584
- DE-U1- 9 106 704
- US-A- 5 572 776
- US-A1- 2008 148 535

## Description

### Field of the Invention

The invention is comprised in the field of devices used for fixing, to a wall or another similar flat surface, a tube that must run along the surface of said wall. In particular, but in a non-limiting manner, the tubes to which the invention applies are conduits for fluids and sheaths for electrical or signal cables.

Specifically, the invention relates to a holding device for holding a tube to a wall of the type comprising a support platform for supporting said holding device against a wall, a through hole going through said support platform for the passage of a fixing element, and at least one open clamp shaped for holding a tube, said clamp comprising two opposite arms and a base which is joined to said two arms and having an upper face for receiving said tube supported on said upper face.

### State of the Art

Holding devices of this type, in which the fixing element for fixing the device to a wall is a screw that goes through the through hole of the support platform, are known. Document WO9723744A1 describes a holding device of this type in which the base of the clamp is a band joining the two arms at the bottom of the clamp and performing the function of a rope, pulling the two arms when it is pushed by a tube and therefore bringing the ends of said arms together. The ends of the arms are provided with snap-fitting closure means joining said ends to one another when they are brought together. The tube is therefore retained between the arms which are in turn kept in place by the snap-fitting closure means. To release the tube, tabs at the ends of the arms are acted on so that the closure means release the ends of the arms which then return to their initial position. In this solution, the tube may be accidentally released when the tabs or the closure means are inadvertently acted on. Moreover, the closure means arranged at the ends of the arms constitute a protruding element on which various elements of an installation such as, for example, a cable, may undesirably get hooked.

US5572776A, WO2006/094609A1, US2008148535A1, DE102004028584A1 and DE9106704U1 describe different solutions of holding devices of this type.

### Description of the Invention

The purpose of the invention is to provide a holding device for holding a tube to a wall of the type indicated above, which offers greater safety in terms of the fixing of the tube and at the same time allows placing and fixing the tube quickly and easily.

This purpose is achieved by means of a holding device according to claim 1. There is provided a holding device for holding a tube to a wall, of the type indicated above, characterized in that the base is elastically deformable, and the assembly formed by the base and the two arms is shaped such that the base can adopt a first stable position, in which the ends of the two arms demarcate an opening between them for introducing the tube in the clamp, and a second stable position, in which said ends of the two arms are closer to one another, with respect to the first stable position, for retaining the tube; and when pressure is applied on the upper face of the base, said base elastically deforms to transition from the first stable position to the second stable position. The first position and the second position of the base are stable positions in the sense that, when said base is in one of these positions, the assembly formed by the base and the two arms opposes an elastic deformation of said base directed to cause said base to abandon its position. For the base to transition from the first stable position to the second stable position and vice versa, a force sufficient for causing an elastic deformation of said base, causing it to transition from one position to another, must be applied. The operation the user must perform for fixing a tube is very quick and simple: with the base arranged in the first stable position, the tube is introduced in the clamp through the opening formed by the ends of the arms, and the upper face of the base is pushed with the tube itself, exerting a force sufficient to cause the elastic deformation of said base and the transition thereof to the second stable position. Optionally, closure means for locking the position of the arms can be provided. These embodiments with closure means still present the advantage of the tube not being undesirably released as a result of said closure means being accidentally acted on, because this tube will be retained in the clamp as long as a force sufficient to cause the base to abandon the second stable position is not exerted.

The arms may have different shapes. For example, each arm may have a circular arc shape. In preferred embodiments, each of the two arms comprises a wing extending in a cantilevered manner from the end of the arm, departing from said arm towards the other arm and the base, each of said wings being configured such that it can undergo elastic bending to be lowered towards the arm from which it extends and apply an elastic force on the tube when the base is in the second stable position. These wings confine a space between the arms, such that they help to correctly place the tube when it is introduced in the clamp. Furthermore, as a result of being elastically applied on the tube, these wings allow firmly fixing tubes of different diameters using the same clamp. Preferably, these wings of the arms are concave, for a better application on the surface of a tube having a circular section.

In some embodiments, the fixing element for fixing the holding device to a wall can be a screw which is not part of the device and is placed such that it goes through the through hole of the support platform. In particular embodiments, intended to dispense with this screw, the holding device comprises a pin constituting the fixing element for fixing said holding device to a wall, said pin being rigidly joined to the base and aligned with the through hole, and said pin being introduced into said through hole and going through the support platform when the base transitions from the first stable position to the second stable position. This configuration according to the invention allows the user to simultaneously perform, with a single movement, the operation of holding a tube to the device and the operation of fixing the device to a wall, and without the user having to be concerned with handling any screw. The operation that the user must perform consists simply of first placing the support platform of the device against the wall, with the through hole aligned with a drill hole previously made in the wall, and then introducing the tube in the clamp, and pushing with said tube the upper face of the base, thereby causing the elastic deformation of said base for it to transition to the second stable position. In this operation, the pin is introduced simultaneously into the drill hole of the wall for fixing the device to the wall, and the ends of the arms are brought closer together for retaining the tube. Where necessary, and depending on the nature of the wall and the shape of the pin, a dowel is first introduced into the drill hole of the wall.

Preferably, the base comprises a rigid central section to which an upper end of the pin is joined, and said rigid central section of the base moves integrally with said pin towards the support platform when the base transitions from the first stable position to the second stable position. This configuration, in which the pin moves integrally with the base in the same direction in which the base is pushed by the tube, provides high robustness and a precise movement of the pin in the axial direction of the through hole.

The holding device optionally comprises a dowel rigidly joined to the support platform. The dowel comprises an inner passage and extends from said support platform such that said inner passage prolongs the through hole and is aligned with the pin. The pin and the dowel are shaped such that said pin is introduced by pressure into said inner passage of the dowel, through said through hole, when the base transitions from the first stable position to the second stable position. This configuration makes the fixing of the device to the wall even easier. The operation the user must perform consists simply of first placing the support platform of the device against the wall, introducing the dowel into a drill hole previously made in the wall. Preferably, the drill hole is sized such that the dowel is introduced into same in a fitted manner. The device is kept in place by means of the dowel introduced into the drill hole, such that the user does not have to be concerned with keeping the device in place in the wall. The user can then perform the operation of introducing the tube in the clamp and pushing the base with said tube, causing the elastic deformation of said base for it to transition to the second position. The pin is thereby introduced into the dowel and the device is fixed to the wall, while at the same time the arms move closer together and retain the tube.

The dowel integrated in the holding device can be of different types depending on the characteristics of the wall in which said device is to be fixed. For example, it can be a nail dowel which opens into two parts when the pin is introduced, a retractable dowel which deforms, retracting on itself, when the pin is introduced, or an expansion dowel which expands when the pin is introduced. In the preferred embodiments, the dowel is an expansion dowel which expands radially with respect to the axis of the inner passage when the pin is introduced by pressure into said inner passage.

The holding device comprises two inclined pillars extending from the support platform, said pillars separating from one another and demarcating a space between them. Each of the two pillars is joined at one end to each of the two arms through an elastically flexible elbow. The base has the shape of an arched bridge, extending over said space, when said base is in the first stable position, and of a concave cradle, going into said space, when said base is in the second stable position. This configuration provides good stability for the two positions of the base. Furthermore, in cases where the holding device is not provided with the pin, such that the user must use a fixing screw, the space demarcated between the two pillars and the base, in the first stable configuration of the base, allows laterally placing the screw to then introduce it into the through hole of the support platform. The need to introduce the screw through a through hole made in the base is thereby eliminated. In the preferred embodiments, the base is a continuous band that is free of through holes, which provides greater robustness and reliability. Furthermore, the absence of through holes in the continuous band forming the base provides a free surface on the upper face of said base which can be used for putting an indication such as, for example, the gauge of the clamp, which the user can see even when the holding device is fixed to a wall.

The base comprises first rigid side sections, each of them prolonging a lower end of one of the arms, second rigid side sections, each of them being joined to one of said first rigid side sections by means of a first joining area, and a rigid central section joined at each of its two ends to one of said second rigid side sections by means of a second joining area. Each of said first and second joining areas is an area with reduced thickness constituting an elastically deformable hinge junction. This constructive solution has the advantage of being simple and robust. Preferably, the construction device is an integral body made of a polymer material. The invention also comprises other features relating to details shown in the following detailed description of an embodiment of the invention and in the attached drawings.

### Brief Description of the Drawings

The advantages and features of the invention can be seen from the following description in which preferred embodiments of the invention are described in a non-limiting manner, in reference to the drawings.
Figures 1 to 5 show a first embodiment of the holding device according to the invention.
Figures 1, 2, and 3 are, respectively, a top perspective view, a bottom perspective view, and a front view of the device, with the base in the first stable position and in the absence of a tube.
Figures 4 and 5 are, respectively, a top perspective view and a front view of the device, with the base in the second stable position and with a tube retained between the arms of the clamp.
Figures 6 to 10 show a second embodiment of the holding device according to the invention.

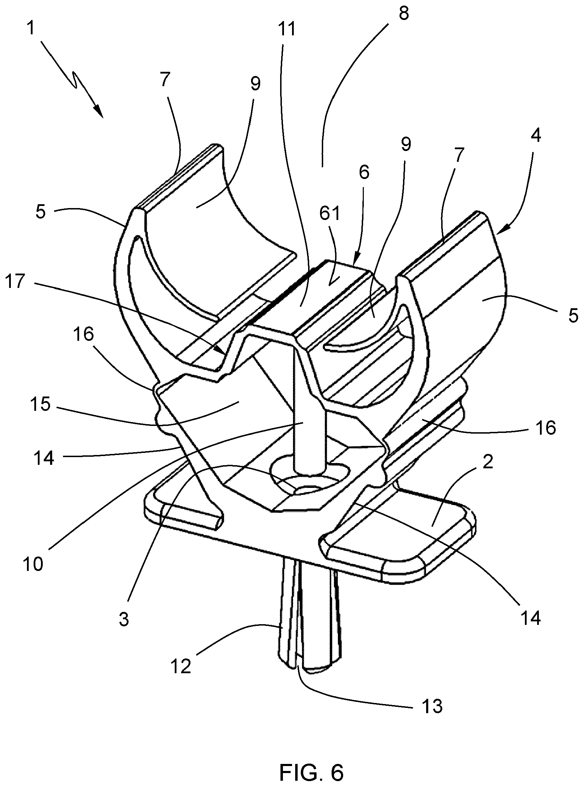

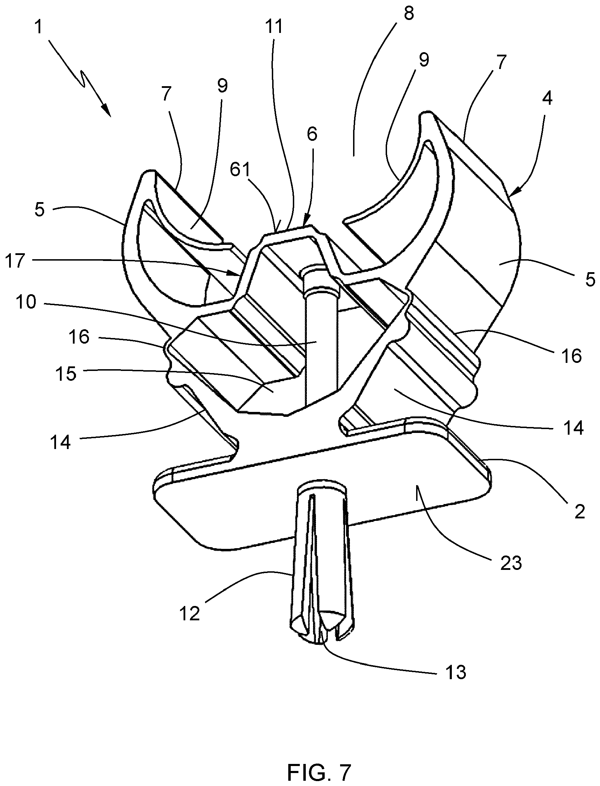

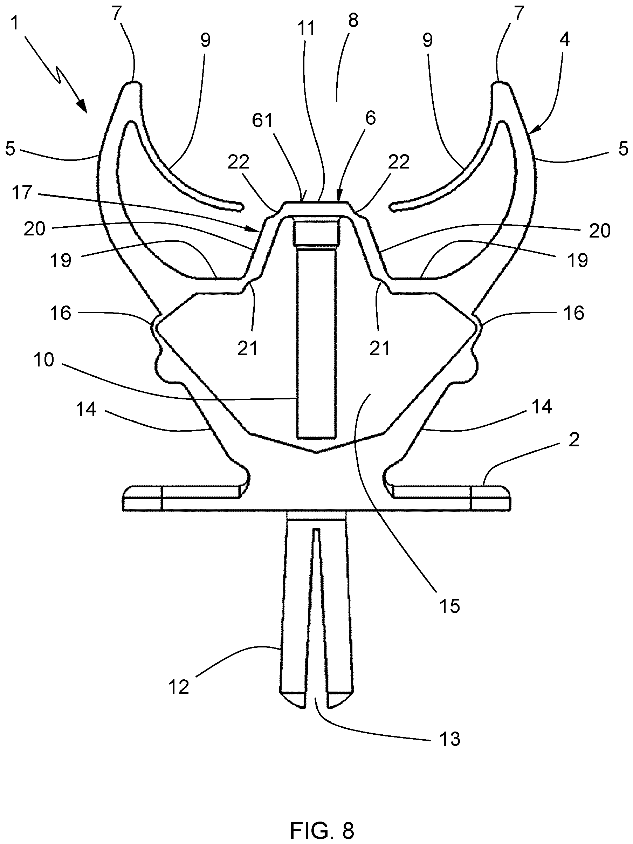

Figures 6, 7, and 8 are, respectively, a top perspective view, a bottom perspective view, and a front view of the device, with the base in the first stable position and in the absence of a tube.

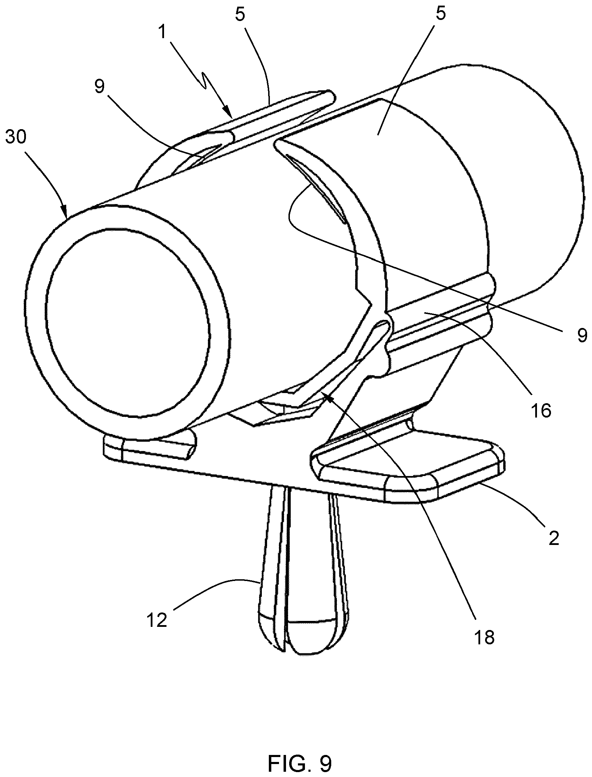

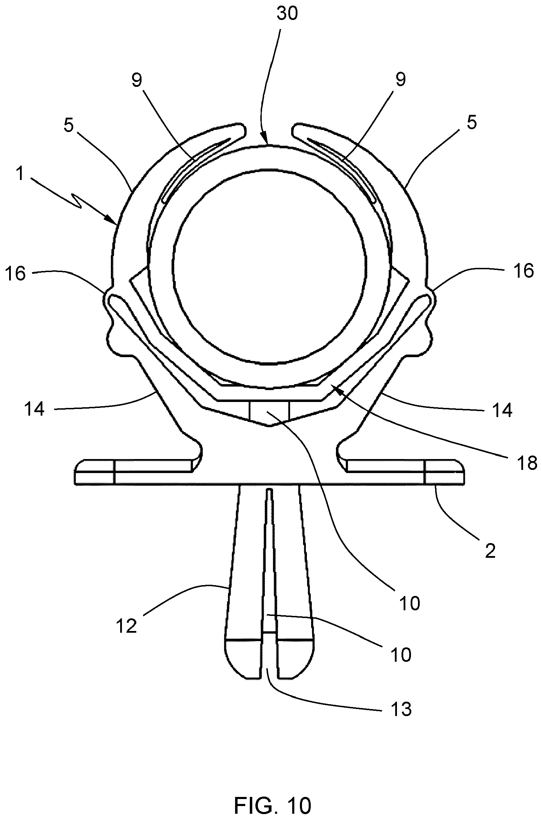

Figures 9 and 10 are, respectively, a top perspective view and a front view of the device, with the base in the second stable position and with a tube retained between the arms of the clamp.

### Detailed Description of Embodiments of the Invention

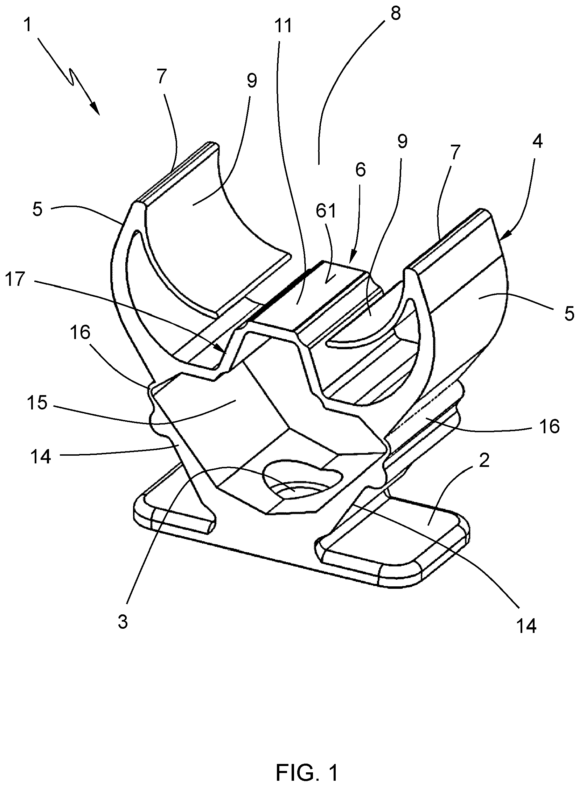

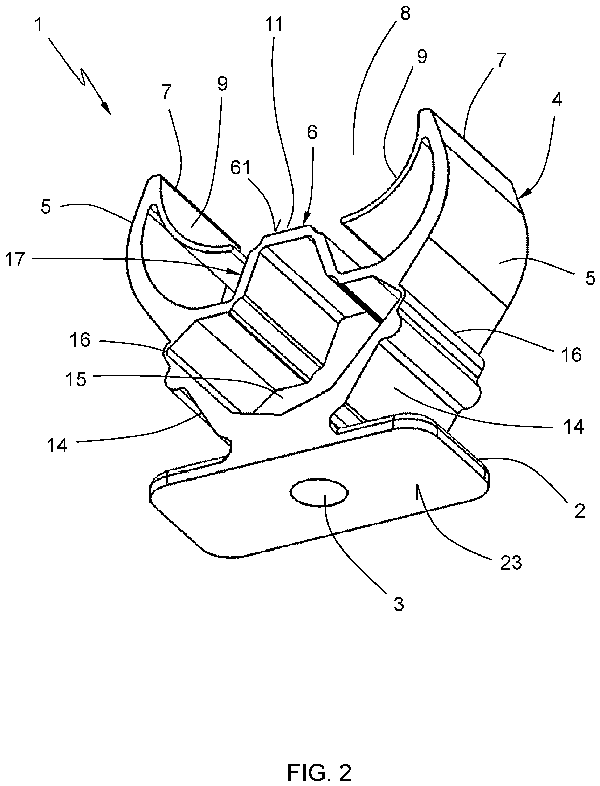

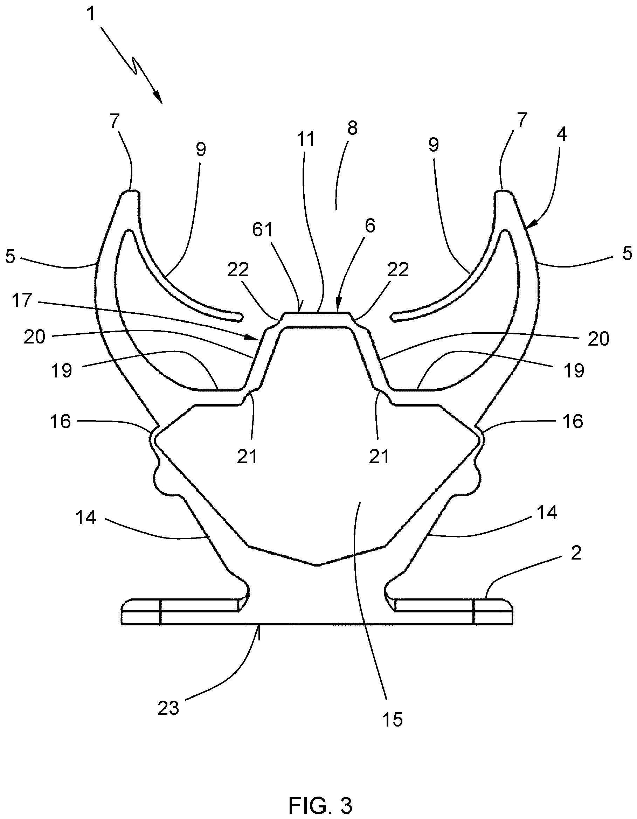

Figures 1 to 5 show a first embodiment in which the holding device is designed for being fixed to a wall by means of a screw (not depicted in the figures) which is not part of the device and is placed through the through hole of the support platform.

The holding device 1 is an integral body molded from a polymer material, for example, a thermoplastic such as PVC, polyamide, or polypropylene. The holding device 1 comprises a support platform 2 and an open clamp 4 for holding a tube. The support platform 2 has a flat lower face 23 intended for being supported on a wall to which the holding device 1 is fixed, and a through hole 3 going through said support platform 2 intended for the passage of a fixing element which, in this case, is a screw (not depicted). The clamp 4 is formed by two opposite arms 5 and a base 6 which is joined to said two arms 5 and has an upper face 61 for receiving a tube. Each of the two arms 5 has a concave wing 9 extending in a cantilevered manner from the end 7 of said arm 5, departing from said arm 5 towards the other arm 5 and the base 6. The wings 9 are in the form of a curved band with a small thickness, such that they are elastically flexible. The clamp 4, formed by the two arms 5 and the base 6, is joined to the support platform 2 by means of two inclined pillars 14 extending from said support platform 2, said pillars separating from one another and demarcating a space 15 between them. Each of the two pillars 14 is joined at one end to each of the two arms 5 through an elastically flexible elbow 16. The base 6 is in the form of a continuous band extending between the two arms 5. More specifically, in the embodiment depicted in the figures, the base 6 comprises first rigid side sections 19, each of them prolonging a lower end of one of the arms 5, second rigid side sections 20, each of them joined to one of said first rigid side sections 19 by means of a first joining area 21, and a rigid central section 11 joined at each of its two ends to one of said second rigid side sections 20 by means of a second joining area 22. Each of the first and second joining areas 21, 22 is an area with reduced thickness constituting an elastically deformable hinge junction.

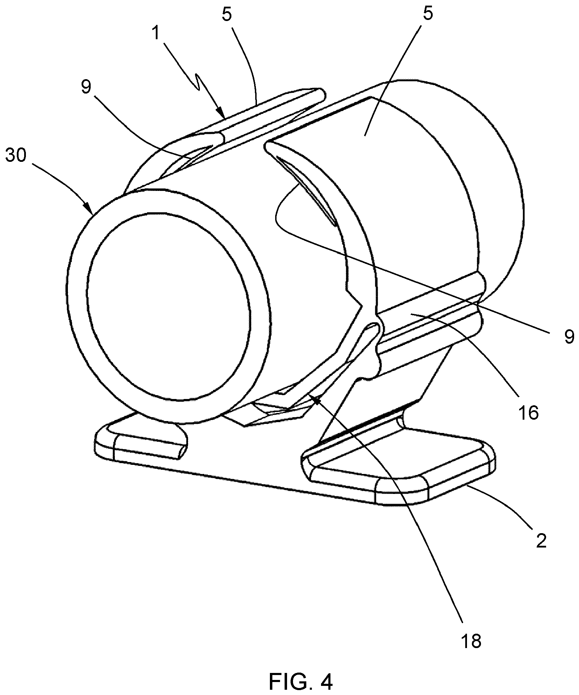

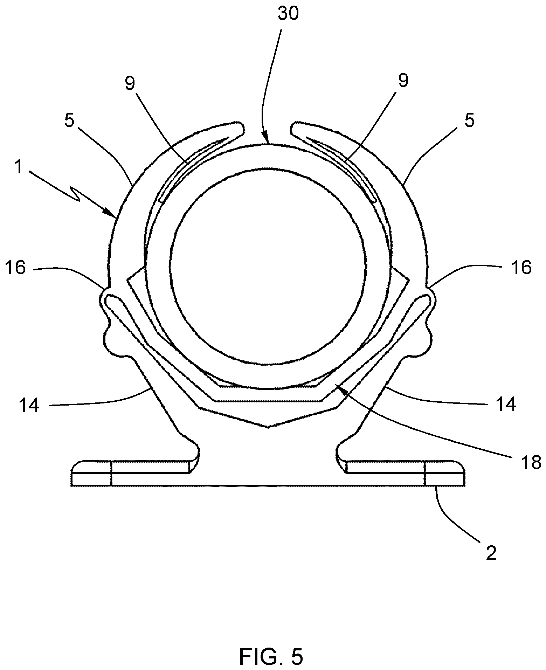

As a result of this configuration, the base 6 is elastically deformable, such that it can adopt a first stable position, shown in Figures 1 to 3, in which the ends 7 of the two arms 5 demarcate an opening 8 between them for introducing a tube 30 in the clamp 4, and a second stable position, shown in Figures 4 and 5, in which the ends 7 of the two arms 5 are closer to one another, with respect to said first stable position, for retaining the tube 30. In the first stable position, the base 6 has the shape of an arched bridge 17, extending above the space 15 laterally demarcated by the pillars 14, whereas in the second stable position, said base 6 forms a concave cradle 18, going into said space 15.

In the embodiment depicted in the figures, the continuous band forming the base 6 is free of through holes. The space 15 under the arched bridge 17, in the first stable position, allows laterally introducing a fixing screw. In other possible embodiments (not depicted in the figures), the continuous band forming the base 6 has through holes, particularly said continuous band may have a through hole suitable for the passage of a fixing screw.

The use of the holding device 1 for holding a tube 30 to a wall is as follows. First, the holding device 1 is arranged with its base 6 in the first stable position shown in Figure 1, in which the ends 7 of the arms 5 are separated from one another and demarcate an opening 8 between them for introducing a tube in the clamp 4. The user fixes the holding device 1 to a wall by means of a screw which passes through the through hole 3 of the support platform 2. As a result of the base 6 forming an arched bridge 17 above the space 15, the user can readily place the screw by introducing it laterally into said space 15 and then passing it through the through hole 3. In other possible embodiments (not shown in the figures), the base 6 has a through hole going through the upper face 61 and allowing the passage of a fixing screw. Once the holding device 1 has been fixed to a wall, the user introduces the tube 30 in the clamp 4 through the opening 8 and moves said tube 30 towards the support platform 2, pushing with said tube 30 the upper face 61 of the base 6. If the pressure exerted by the tube 30 on the upper face 61 of the base 6 is sufficient, the base 6 abandons the first stable position, elastically deforms, and transitions to the second stable position. In this second stable position, the tube 30 is retained between the arms 5. More precisely, the tube 30 is retained between the wings 9 of the arms 5. As can be seen by comparing Figures 1 and 5, the wings 9 are applied on the tube 30 and they undergo elastic bending, being lowered towards the arm 5 from which they extend. The wings 9 therefore apply an elastic force on the tube 30 when the base 6 is in the second stable position. Other embodiments in which the arms 5 are free of wings 9 are possible, in which case the arms 5 themselves will come into contact with the tube 30.

To release the tube 30 from the position shown in Figure 5, the user can separate the arms 5 by exerting thereon a force sufficient for the base 6 to abandon the second stable position, elastically deform again, and return to the first stable position. This force for separating the arms 5 can be applied by acting directly on the arms 5, for example by manually separating them, or by pulling the tube 30 away from the support platform 2.

Figures 6 to 10 show a second embodiment in which the holding device is designed to be able to be fixed to a wall without having to use a screw, and to enable the user to simultaneously perform, with a single movement, the operation of holding a tube to the device and the operation of fixing the device to a wall.

This second embodiment is the same as the first embodiment throughout, with the exception of the features described below. The holding device 1 comprises a dowel 12 rigidly joined to the support platform 2 and intended for being introduced into a drill hole in the wall, and a pin 10 which is rigidly joined to the base 6 and constitutes the fixing element for fixing the holding device 1 to a wall. As will be seen below, the pin 10 moves integrally with the base 6 and is introduced in the dowel 12 through the through hole 3 of the support platform 2.

The dowel 12 extends from the support platform 2 and has an inner passage 13 which prolongs the through hole 3 and is aligned with the pin 10. The dowel 12 is an expansion dowel which expands radially with respect to the axis of the inner passage 13 when the pin 10 is introduced by pressure into said inner passage 13.

The pin 10 is joined at an upper end to the rigid central section 11 of the base 6, such that said pin 10 moves integrally with said central section 11. When the base 6 transitions from the first stable position (Figures 6 to 8) to the second stable position (Figures 9 to 10), the pin 10 goes through the support platform 2 through the through hole 3 and is introduced by pressure into the inner passage 13 of the dowel 12.

Like in the first embodiment, the holding device 1 shown in Figures 6 to 10 is an integral body molded from a polymer material, for example, a thermoplastic such as PVC, polyamide, or polypropylene.

The use of the holding device 1 according to this second embodiment is as follows. First, the holding device 1 is arranged with its base 6 in the first stable position shown in Figure 6, in which the ends 7 of the arms 5 are separated, demarcating an opening 8 between them for introducing a tube in the clamp 4, and the pin 10 is arranged outside the dowel 12 in space 15. The user places the holding device 1 against the wall, introducing the dowel 12 into a corresponding drill hole made in the wall. Once the holding device 1 has been fixed against the wall, the user introduces the tube 30 in the clamp 4 through the opening 8 and moves said tube 30 towards the support platform 2, pushing the upper face 61 of the base 6 with said tube 30. If the pressure exerted by the tube 30 on the upper face 61 of the base 6 is sufficient, the base 6 abandons the first stable position, elastically deforms, and transitions to the second stable position, and at the same time the pin 10 goes through the support platform 2 through the through hole 3 and is introduced by pressure into the inner passage 13 of the dowel 12. The tube is retained between the wings 9 of the arms in the same manner described above for the first embodiment. The difference is that in this case, the movement of the tube 30 causes at the same time the transition of the base 6 to the second stable position for holding the tube 30 between the arms 5, and the introduction by pressure of the pin 10 into the inner passage 13 of the dowel 12 for fixing the holding device 1 against the wall.

The tube 30 can be released again by proceeding according to the first embodiment. The difference is that when the base 6 returns to the first stable position, in addition to the release of the tube 30, the holding device 1 is released with respect to the wall, given that the pin 10 comes out of the inner passage 13 of the dowel 12. In Figures 6 to 10, the pin 10 has a smooth surface, but other embodiments in which the pin 10 has retaining protrusions are possible. Embodiments in which the holding device has the pin 10 but not the dowel 12 are also possible. In this case, the pin 10 is introduced in a dowel which is not part of the holding device and has been previously introduced into a drill hole in the wall.

## Claims

1. A holding device (1) for holding a tube (30) to a wall, said holding device (1) comprising a support platform (2) for supporting said holding device (1) against the wall, a through hole (3) going through said support platform (2) for the passage of a fixing element, and at least one open clamp (4) shaped for holding the tube (30), said clamp (4) comprising two opposite arms (5) and a base (6) which is joined to said two arms (5) and having an upper face (61) for receiving said tube (30) supported on said upper face (61), said base (6) being elastically deformable, and the assembly formed by said base (6) and said two arms (5) being shaped such that said base (6) can adopt a first stable position, in which the ends (7) of said two arms (5) demarcate an opening (8) between them for introducing said tube (30) in said clamp (4), and a second stable position, in which said ends (7) of the two arms (5) are closer to one another, with respect to said first stable position, for retaining said tube (30); and when pressure is applied on said upper face (61) of said base (6), said base (6) elastically deforms to transition from said first stable position to said second stable position; said holding device (1) comprising two inclined pillars (14) extending from said support platform (2), said pillars separating from one another and demarcating a space (15) between them, each of said two pillars (14) being joined at one end to each of said two arms (5) through an elastically flexible elbow (16), and said base (6) has the shape of an arched bridge (17), extending over said space (15), when said base (6) is in said first stable position, and of a concave cradle (18), going into said space (15), when said base (6) is in said second stable position; **characterized in that** said base (6) comprises first rigid side sections (19), each of them prolonging a lower end of one of said arms (5), second rigid side sections (20), each of them being joined to one of said first rigid side sections (19) by means of a first joining area (21), and a rigid central section (11) joined at each of its two ends to one of said second rigid side sections (20) by means of a second joining area (22), each of said first and second joining areas (21, 22) being an area with reduced thickness constituting a hinge junction by elastic deformation.

2. The holding device (1) according to claim 1, **characterized in that** each of said two arms (5) comprises a wing (9) extending in a cantilevered manner from the end (7) of said arm (5), departing from said arm (5) towards the other arm (5) and said base (6), each of said wings (9) being configured such that it can undergo elastic bending to be lowered towards the arm (5) from which it extends and apply an elastic force on said tube (30) when said base (6) is in said second stable position.

3. The holding device (1) according to claim 2, **characterized in that** said wing (9) is concave.

4. The holding device (1) according to any one of claims 1 to 3, **characterized in that** said holding device (1) comprises a pin (10) constituting said fixing element for fixing said holding device (1) to a wall, said pin (10) being rigidly joined to said base (6) and aligned with said through hole (3), and said pin (10) being introduced into said through hole (3) and going through said support platform (2) when said base (6) transitions from said first stable position to said second stable position.

5. The holding device (1) according to claim 4, **characterized in that** an upper end of said pin (10) is joined to the rigid central section (11), and said rigid central section (11) of the base (6) moves integrally with said pin (10) towards said support platform (2) when said base (6) transitions from said first stable position to said second stable position.

6. The holding device (1) according to any one of claims 4 or 5, **characterized in that** said holding device (1) comprises a dowel (12) rigidly joined to said support platform (2), said dowel (12) comprising an inner passage (13) and said dowel (12) extending from said support platform (2) such that said inner passage (13) prolongs said through hole (3) and is aligned with said pin (10), and said pin (10) and said dowel (12) being shaped such that said pin (10) is introduced by pressure into said inner passage (13) of the dowel (12) through said through hole (3) when said base (6) transitions from said first stable position to said second stable position.

7. The holding device (1) according to claim 6, **characterized in that** said plug (12) is an expansion dowel which expands radially with respect to the axis of said inner passage (13) when said pin (10) is introduced by pressure into said inner passage (13).

8. The holding device (1) according to any one of claims 1 to 7, **characterized in that** said base (5) is a continuous band that is free of through holes.

9. The holding device (1) according to any one of claims 1 to 8, **characterized in that** said holding device (1) is an integral body made of a polymer material.

## Patentansprüche

1. Eine Haltevorrichtung (1) zum Halten eines Rohres (30) an einer Wand, wobei die Haltevorrichtung (1) eine Stützplattform (2) zum Abstützen der Haltevorrichtung (1) an der Wand, ein durch die Stützplattform (2) verlaufendes Durchgangsloch (3) für den Durchgang eines Befestigungselementes, und mindestens eine offene Klemme (4) aufweist, die zum Halten des Rohres (30) geformt ist, wobei die Klemme (4) zwei einander gegenüberliegende Arme (5) und eine Basis (6) aufweist, die mit beiden Armen (5) verbunden ist und eine obere Fläche (61) zum Aufnehmen des Rohres (30), das sich auf der oberen Fläche (61) abstützt, hat, wobei die Basis (6) elastisch verformbar ist, und die durch die Basis (6) und die beiden Arme (5) ausgebildete Einheit so geformt ist, dass die Basis (6) eine erste stabile Position einnehmen kann, in der die Enden (7) der beiden Arme (5) eine Öffnung (8) zwischen diesen zum Einführen des Rohres (30) in die Klemme (4) begrenzen, und eine zweite stabile Position einnehmen kann, in der die Enden (7) der beiden Arme (5), mit Bezug auf die erste stabile Position, zum Zurückhalten des Rohres (30) näher beieinander sind; und wenn Druck auf die obere Fläche (61) der Basis (6) ausgeübt wird, sich die Basis elastisch verformt, um von der ersten stabilen Position in die zweite stabile Position überzugehen; wobei die Haltevorrichtung (1) zwei geneigte Stützen (14) umfasst, die sich von der Stützplattform (2) aus erstrecken, wobei die Stützen voneinander getrennt sind und einen Raum (15) zwischen sich begrenzen, wobei jede der beiden Stützen (14) an einem Ende mit jedem der beiden Arme (5) durch einen elastisch flexiblen Ellbogen (16) verbunden ist, und die Basis (6) die Form einer gebogenen Brücke (17) hat, die sich über den Raum (15) erstreckt, wenn die Basis (6) in der ersten stabilen Position ist, und die Form einer konkaven Gabel (18) hat, die in den Raum (15) hineinragt, wenn die Basis (6) in der zweiten stabilen Position ist;
**dadurch gekennzeichnet, dass** die Basis (6) erste starre Seitenabschnitte (19) aufweist, von denen jeder ein unteres Ende eines der Arme (5) verlängert, zweite starre Seitenabschnitte (20) aufweist, von denen jeder mit einem der ersten starren Seitenabschnitte (19) mittels eines ersten Verbindungsbereiches (21) verbunden ist, und einen starren Mittelabschnitt (11) aufweist, der an jedem seiner beiden Enden mit einem der zweiten starren Seitenabschnitte (20) mittels eines zweiten Verbindungsbereiches (22) verbunden ist, wobei jeder der ersten und zweiten Verbindungsbereiche (21, 22) ein Bereich mit verringerter Dicke ist, der eine Gelenkverbindung durch elastische Verformung bildet.

2. Die Haltevorrichtung (1) gemäß Anspruch 1, **dadurch gekennzeichnet, dass** jeder der zwei Arme (5) einen Flügel (9) aufweist, der sich freitragend vom Ende (7) des Armes (5) erstreckt, abgehend von dem Arm (5) in Richtung des anderen Armes (5) und der Basis (6), wobei jeder der Flügel so konfiguriert ist, dass er eine elastische Biegung durchläuft, um in Richtung des Armes (5), von dem er ausgeht, abgesenkt zu werden, und eine elastische Kraft auf das Rohr (30) ausübt, wenn sich die Basis (6) in der zweiten stabilen Position befindet.

3. Die Haltevorrichtung (1) gemäß Anspruch 2, **dadurch gekennzeichnet, dass** der Flügel (9) konkav ist.

4. Die Haltevorrichtung (1) gemäß einem der Ansprüche 1 bis 3, **dadurch gekennzeichnet, dass** die Haltevorrichtung (1) einen Stift (10) umfasst, der das Befestigungselement zum Befestigen der Haltevorrichtung (1) an einer Wand bildet, wobei der Stift (10) starr mit der Basis (6) verbunden ist und mit dem Durchgangsloch (3) ausgerichtet ist, und der Stift (10) in das Durchgangsloch (3) eingeführt wird und durch die Stützplattform (2) hindurchgeht, wenn die Basis (6) von der ersten stabilen Position in die zweite stabile Position übergeht.

5. Die Haltevorrichtung (1) gemäß Anspruch 4, **dadurch gekennzeichnet, dass** ein oberes Ende des Stiftes (10) mit dem starren Mittelabschnitt (11) verbunden ist, und wobei der starre Mittelabschnitt (11) der Basis (6) sich einstückig mit dem Stift (10) in Richtung der Stützplattform (2) bewegt, wenn die Basis (6) von der ersten stabilen Position in die zweite stabile Position übergeht.

6. Die Haltevorrichtung (1) gemäß einem der Ansprüche 4 oder 5, **dadurch gekennzeichnet, dass** die Haltevorrichtung (1) einen Dübel (12) aufweist, der starr mit der Stützplattform (2) verbunden ist, wobei der Dübel (12) einen inneren Durchgang (13) aufweist und wobei der Dübel (12) sich von der Stützplattform (2) so erstreckt, dass der innere Durchgang (13) das Durchgangsloch (3) verlängert und mit dem Stift (10) ausgerichtet ist, und wobei der Stift (10) und der Dübel (12) so geformt sind, dass der Stift (10) durch Druck in den inneren Durchgang (13) des Dübels (12) durch das Durchgangsloch (3) eingeführt wird, wenn die Basis (6) von der ersten stabilen Position in die zweite stabile Position übergeht.

7. Die Haltevorrichtung (1) gemäß Anspruch 6, **dadurch gekennzeichnet, dass** der Dübel (12) ein Spreizdübel ist, der sich radial in Bezug auf die Achse des inneren Durchgangs (13) ausdehnt, wenn der Stift (10) durch Druck in den inneren Durchgang (13) eingeführt wird.

8. Die Haltevorrichtung (1) gemäß einem der Ansprüche 1 bis 7, **dadurch gekennzeichnet, dass** die Basis ein durchgehendes Band ist, das frei von Durchgangslöchern ist.

9. Die Haltevorrichtung (1) gemäß einem der Ansprüche 1 bis 8, **dadurch gekennzeichnet, dass** die Haltevorrichtung ein einteiliger Körper aus einem Polymermaterial ist.

## Revendications

1. Dispositif de maintien (1) pour maintenir un tube (30) sur un mur, ledit dispositif de maintien (1) comprenant une plate-forme de support (2) pour appuyer ledit dispositif de maintien (1) contre le mur, un trou traversant (3) passant à travers ladite plate-forme de support (2) pour le passage d'un élément de fixation, et au moins un collier d'attache(4) ouvert formé pour maintenir le tube (30), ledit collier d'attache (4) comprenant deux bras (5) opposés et une base (6) qui est jointe auxdits deux bras (5) et ayant une face supérieure (61) pour recevoir ledit tube (30) appuyé sur ladite face supérieure (61), ladite base (6) étant déformable élastiquement, et l'ensemble formé par ladite base (6) et lesdits deux bras (5) étant formé de sorte que ladite base (6) puisse adopter une première position stable, dans laquelle les extrémités (7) desdits deux bras (5) délimitent une ouverture (8) entre elles pour introduire ledit tube (30) dans ledit collier d'attache (4), et une seconde position stable, dans laquelle lesdites extrémités (7) des deux bras (5) sont plus près l'une de l'autre, par rapport à ladite première position stable, pour retenir ledit tube (30) ; et lorsqu'une pression est appliquée sur ladite face supérieure (61) de ladite base (6), ladite base (6) se déforme élastiquement pour passer de ladite première position stable à ladite seconde position stable ; ledit dispositif de maintien (1) comprenant deux piliers (14) inclinés s'étendant depuis ladite plate-forme de support (2), lesdits piliers se séparant l'un de l'autre et délimitant un espace (15) entre eux, chacun desdits deux piliers (14) étant joint au niveau d'une extrémité à chacun desdits deux bras (5) par un coude (16) élastiquement flexible, et ladite base (6) a la forme d'un pont arqué (17), s'étendant au-dessus dudit espace (15), lorsque ladite base (6) est dans ladite première position stable, et d'un berceau concave (18), allant dans ledit espace (15), lorsque ladite base (6) est dans ladite seconde position stable ; **caractérisé en ce que** ladite base (6) comprend des premières sections de côté (19) rigides, chacune d'elles prolongeant une extrémité inférieure de l'un desdits bras (5), des secondes sections de côté (20) rigides, chacune d'elles étant jointe à l'une desdites premières sections de côté (19) rigides au moyen d'une première zone de jonction (21), et une section centrale (11) rigide jointe au niveau de chacune de ses deux extrémités à l'une desdites secondes sections de côté (20) rigides au moyen d'une seconde zone de jonction (22), chacune desdites première et seconde zones de jonction (21, 22) étant une zone d'épaisseur réduite constituant une jonction charnière par déformation élastique.

2. Dispositif de maintien (1) selon la revendication 1, **caractérisé en ce que** chacun desdits deux bras (5) comprend une aile (9) s'étendant en porte-à-faux depuis l'extrémité (7) dudit bras (5), en partant dudit bras (5) vers l'autre bras (5) et ladite base (6), chacune desdites ailes (9) étant configurée de sorte qu'elle puisse subir une flexion élastique pour être abaissée vers le bras (5) depuis lequel elle s'étend et appliquer une force élastique sur ledit tube (30) lorsque ladite base (6) est dans ladite seconde position stable.

3. Dispositif de maintien (1) selon la revendication 2, **caractérisé en ce que** ladite aile (9) est concave.

4. Dispositif de maintien (1) selon l'une quelconque des revendications 1 à 3, **caractérisé en ce que** ledit dispositif de maintien (1) comprend un tenon (10) constituant ledit élément de fixation pour fixer ledit dispositif de maintien (1) à un mur, ledit tenon (10) étant joint rigidement à ladite base (6) et aligné avec ledit trou traversant (3), et ledit tenon (10) étant introduit dans ledit trou traversant (3) et passant à travers ladite plate-forme de support (2) lorsque ladite base (6) passe de ladite première position stable à ladite seconde position stable.

5. Dispositif de maintien (1) selon la revendication 4, **caractérisé en ce qu'**une extrémité supérieure dudit tenon (10) est jointe à la section centrale (11) rigide, et ladite section centrale (11) rigide de la base (6) se déplace d'un seul tenant avec ledit tenon (10) vers ladite plate-forme de support (2) lorsque ladite base (6) passe de ladite première position stable à ladite seconde position stable.

6. Dispositif de maintien (1) selon l'une quelconque des revendications 4 ou 5, **caractérisé en ce que** ledit dispositif de maintien (1) comprend une cheville (12) jointe rigidement à ladite plate-forme de support (2), ladite cheville (12) comprenant un passage intérieur (13) et ladite cheville (12) s'étendant depuis ladite plate-forme de support (2) de sorte que ledit passage intérieur (13) se prolonge à travers ledit trou traversant (3) et soit aligné avec ledit tenon (10), et ledit tenon (10) et ladite cheville (12) étant formés de sorte que ledit tenon (10) soit introduit par pression dans ledit passage intérieur (13) de la cheville (12) à travers ledit trou traversant (3) lorsque ladite base (6) passe de ladite première position stable à ladite seconde position stable.

7. Dispositif de maintien (1) selon la revendication 6, **caractérisé en ce que** ladite cheville (12) est une cheville à expansion qui s'agrandit radialement par rapport à l'axe dudit passage intérieur (13) lorsque ledit tenon (10) est introduit par pression dans ledit passage intérieur (13).

8. Dispositif de maintien (1) selon l'une quelconque des revendications 1 à 7, **caractérisé en ce que** ladite base (5) est une bande continue qui est dépourvue de trous traversants.

9. Dispositif de maintien (1) selon l'une quelconque des revendications 1 à 8, **caractérisé en ce que** ledit dispositif de maintien (1) est un corps d'un seul tenant réalisé en un matériau polymère.
